# EUROPÄISCHE PATENTSCHRIFT

(11) **EP 3 309 524 B1**
(45) Veröffentlichungstag und Bekanntmachung des Hinweises auf die Patenterteilung: **26.06.2019**
(21) Anmeldenummer: 17192526.6
(22) Anmeldetag: 22.09.2017
(51) Int. Cl.: G01G 13/00, G01G 13/02, G01G 13/295, B29C 31/02, B29C 31/06

(54) **VERFAHREN ZUM BEFÜLLEN EINES WIEGEBEHÄLTERS FÜR KUNSTSTOFFGRANULAT**
METHOD FOR FILLING A WEIGHING CONTAINER FOR PLASTIC GRANULATE
PROCÉDÉ DE REMPLISSAGE D'UN RÉCIPIENT DE PESÉE POUR DU GRANULAT EN MATIÈRE PLASTIQUE

(30) Priorität: 14.10.2016 DE 102016119596
(43) Veröffentlichungstag der Anmeldung: 18.04.2018
(73) Patentinhaber: Plast-Control GmbH, 42899 Remscheid (DE)
(72) Erfinder: KONERMANN, Stefan, 42897 Remscheid (DE)
(74) Vertreter: Ter Meer Steinmeister & Partner

(56) Entgegenhaltungen:
- WO-A1-2008/128558
- CH-A5- 684 902
- DE-A1-102004 016 756

## Beschreibung

Die Erfindung betrifft ein Verfahren zum Befüllen eines Wiegebehälters für Kunststoffgranulat, bei dem man das Granulat aus einem Zuführrohr über ein Absperrorgan in den Wiegebehälter fallen lässt.

Ein Verfahren dieser Art wird in DE 10 2004 016 756 B4 und der CH 684 902 A beschrieben.

Wiegebehälter werden in der Kunststoff verarbeitenden Industrie dazu eingesetzt, bei der Herstellung von Kunststoffschmelzen aus Granulat oder Granulatgemischen die eingesetzten Materialmengen genau zu dosieren. Dazu wird der Wiegebehälter bis zu einer maximalen Füllhöhe mit Granulat befüllt. Nachdem das Absperrorgan geschlossen wurde, lässt man das Granulat am unteren Ende des Wiegebehälters in eine Fördereinrichtung oder ein nachgeschaltetes Aggregat wie beispielsweise einen Plastifizierer austreten und misst dabei die Gewichtsabnahme des Wiegebehälters einschließlich seines Inhalts.

Unterhalb des Absperrorgans ist bisher ein vertikaler Zulaufstutzen angeordnet, über den das Granulat in den Wiegebehälter eintritt, der jedoch nicht fest mit dem Wiegebehälter verbunden ist und somit nicht zu dem gemessenen Gewicht beiträgt. Der Wiegebehälter wird nur bis zu einer solchen Höhe befüllt, dass der durch das Granulat gebildete Schüttkegel noch unterhalb des unteren Endes des Zulaufstutzens bleibt. Dadurch wird insbesondere verhindert, dass sich das Granulat im Zulaufstutzen staut und sich seitlich an den vertikalen Wänden des Zulaufstutzens abstützt und dadurch das Wiegeergebnis verfälscht wird.

Auch bei maximaler Füllhöhe besteht somit in dem Wiegebehälter am oberen Ende stets ein gewisser Totraum, der nicht mit Granulat gefüllt wird. In diesem Totraum können sich Granulatstaub und sogenanntes Engelshaar sammeln. Unter Engelshaar versteht man fadenförmige Agglomerate aus Granulatstaub, die sich aufgrund von Stößen zwischen Staubpartikeln bilden, wenn das Granulat in einer Vakuumförderanlage gefördert wird. Aufgrund statischer Aufladung neigen der Granulatstaub und das Engelshaar dazu, an den Wänden des Wiegebehälters haften zu bleiben.

In den Regionen, in denen der Staub und das Engelshaar nicht durch mechanische Berührung mit den Granulatpartikeln abgestreift werden, also insbesondere in dem Tot-raum am oberen Ende des Wiegebehälters, können sich deshalb Staub und Engelshaar ansammeln, bis sich größere Mengen dieses Materials ablösen und in das Granulat fallen. Da dieses staubartige Material im Extruder oft nicht komplett aufgeschmolzen wird, kann es zu Fehlern in den hergestellten Kunststoffprodukten führen, insbesondere bei der Herstellung von Kunststofffolien. Aus diesem Grund ist es erforderlich, den an den Wänden des Wiegebehälters haftenden Staub in regelmäßigen Abständen zu entfernen. Insbesondere muss bei einem Wechsel der Granulatsorte der Staub entfernt werden, damit die Sortenreinheit des Materials gewährleistet bleibt.

Das manuelle Entfernen des Granulatstaubs ist aufwändig und zeitraubend.

Aufgabe der Erfindung ist es, ein Verfahren anzugeben, das es erlaubt, die Entstehung größerer Ansammlungen von staubförmigem Kunststoffmaterial im Wiegebehälter zu unterdrücken.

Diese Aufgabe wird erfindungsgemäß dadurch gelöst, dass man den Wiegebehälter nach oben durch eine Wand abschließt, die einen bis unmittelbar an das Absperrorgan heranreichenden konischen Teil hat, und dass man den Wiegebehälter bis zur Höhe des Absperrorgans mit Granulat auffüllt.

Dadurch, dass der Wiegebehälter bis zur Höhe des Absperrorgans gefüllt wird, verbleibt im Wiegebehälter kein Totraum, an dessen Wänden sich das staubförmige Material sammeln könnte. Da andererseits der Teil der oberen Abschlusswand, der an den Auslass des Absperrorgans angrenzt, eine konische Gestalt hat, wird eine Verfälschung des Wiegeergebnisses vermieden, da sich das Granulat an dieser konischen Wand nicht seitlich abstützen kann.

Gegenstand der Erfindung ist außerdem eine Verwiegeeinrichtung für Kunststoffgranulat, die für die Ausführung des erfindungsgemäßen Verfahrens geeignet ist.

Vorteilhafte Ausgestaltungen und Weiterbildungen der Verwiegeeinrichtung sind in den Unteransprüchen angegeben. Der Kegelwinkel des konischen Teils der Wand, also der Winkel, den diese Wand mit der Horizontalen bildet, beträgt vorzugsweise zwischen 20 und 70°, wobei der genaue Wert von der Sorte des Kunststoffgranulats abhängig sein kann.

Der konische Teil der oberen Abschlusswand kann getrennt von dem Wiegebehälter ausgebildet und an dem Absperrorgan gehalten sein. Wahlweise kann dieser konische Teil jedoch auch Teil des Wiegebehälters sein.

Im folgenden wird ein Ausführungsbeispiel anhand der Zeichnung näher erläutert.

Es zeigen:
- Fig. 1: einen vertikalen Schnitt durch einen Teil einer Verwiegeeinrichtung mit einem Wiegebehälter für Kunststoffgranulat während eines Befüllvorgangs;
- Fig. 2: den Wiegebehälter im vollständig mit Granulat gefüllten Zustand;
- Fig. 3: den Wiegebehälter im Zustand nach Schließen eines Absperrorgans; und
- Fig. 4: den Wiegebehälter während der Entleerung.

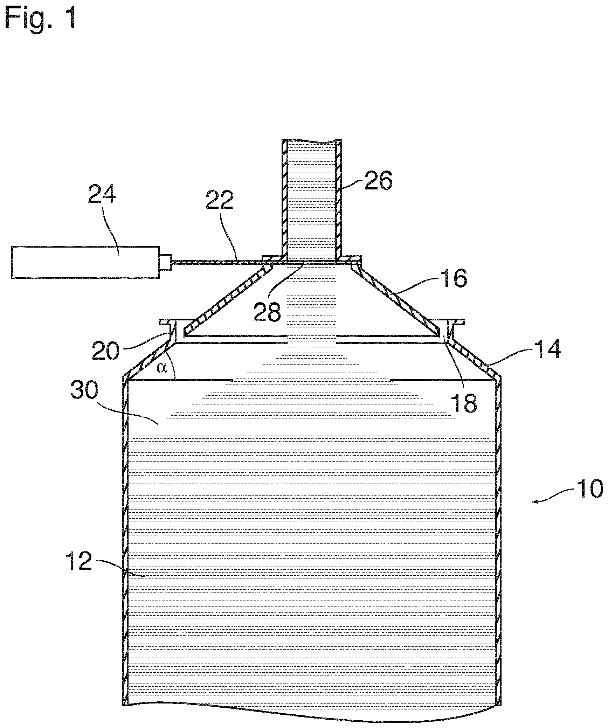

In Fig. 1 ist der obere Teil eines insgesamt im wesentlichen zylindrischen Wiegebehälters 10 gezeigt, der mit einem Kunststoffgranulat 12 befüllt wird.

Der Wiegebehälter 10 wird nach oben durch eine konische Wand abgeschlossen, die einen fest mit dem Wiegebehälter verbundenen äußeren und unteren Teil 14 und einen getrennt von dem Wiegebehälter 10 ausgebildeten inneren und oberen Teil 16 hat. Die beiden Teile 14, 16 sind durch einen Spalt 18 voneinander getrennt, der von einem an dem Teil 14 sitzenden Kragen 20 umgeben ist. Der obere Teil 16 schließt unmittelbar an ein Absperrorgan 22 an, das im gezeigten Beispiel durch einen Schieber mit einem zugehörigen Antrieb 24 gebildet wird. Das Absperrorgan 22 und der obere Teil 16 der Abschlusswand sind gemeinsam am unteren Ende eines Zuführrohres 26 gehalten, über welches das Granulat in das Innere des Wiegebehälters 10 fällt.

In dem in Fig. 1 gezeigten Zustand ist das Absperrorgan 22 offen, d.h., eine Öffnung 28 des Schiebers fluchtet mit dem Innenquerschnitt des Zuführrohres 26, so dass das Granulat in den Wiegebehälter 10 fällt und dort einen Schüttkegel 30 bildet.

Der Kegelwinkel α der durch die Teile 14 und 16 gebildeten konischen Abschlusswand des Wiegebehälters ist größer als der Schüttwinkel des Granulats, also der Steigungswinkel des Schüttkegels 30, so dass das Granulat auch den durch die konische Abschlusswand begrenzten oberen Teil des Wiegebehälters 10 vollständig ausfüllen kann, wenn der Füllstand im Behälter zunimmt.

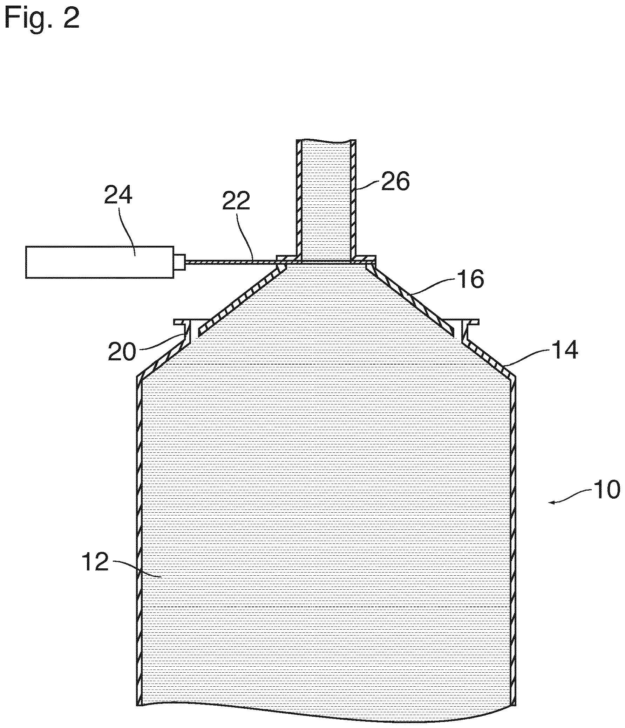

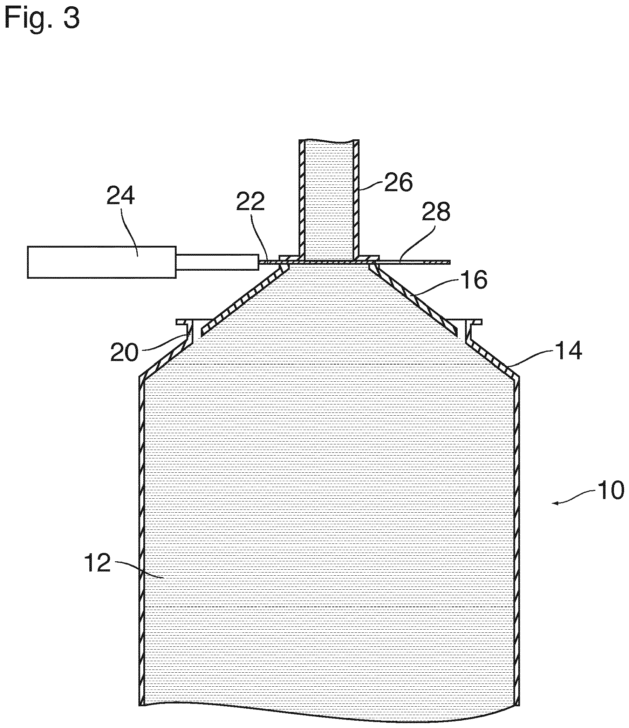

Fig. 2 zeigt den Zustand, in dem der Wiegebehälter vollständig, bis zur Höhe des Absperrorgans 22, mit dem Granulat 12 gefüllt ist. Das Granulat füllt in diesem Zustand das Innere des Wiegebehälters einschließlich des konischen oberen Teils praktisch vollständig aus, so dass so gut wie keine Toträume im Wiegebehälter verbleiben. In diesem Zustand wird nun das Absperrorgan 22 geschlossen, wie in Fig. 3 gezeigt ist. Etwaiger Granulatstaub, der aufgrund elektrostatischer Aufladung an dem Schieber des Absperrorgans 22 haften könnte, wird durch die horizontale Bewegung des Schiebers abgestreift.

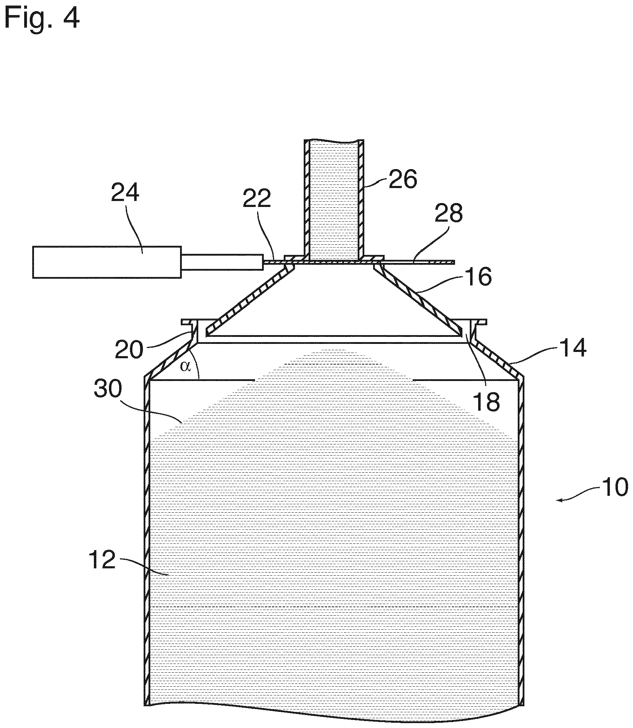

Das nicht gezeigte untere Ende des Wiegebehälters 10 ist trichterförmig ausgebildet und führt zu einem Förderer, mit dem das Material kontinuierlich abtransportiert wird. Solang das obere Absperrorgan 22 geschlossen ist, nimmt der Füllpegel des Granulats im Wiegebehälter 10 ab, da kein weiteres Granulat aus dem Zuführrohr 26 nachläuft. Wie in Fig. 4 gezeigt ist, entsteht auf diese Weise in dem konischen oberen Teil des Wiegebehälters 10 ein leerer Raum, der sich in dem Maße vergrößert, wie Granulat am unteren Ende des Wiegebehälters austritt.

Der Wiegebehälter 10 ruht auf einer nicht gezeigten Wiegezelle, mit der die Gewichtsabnahme des Behälters einschließlich des darin enthaltenen Granulats 12 fortlaufend gemessen wird. Auf diese Weise lässt sich mit hoher Präzision die Materialmenge bestimmen, die den Wiegebehälter verlässt.

Der Kegelwinkel α der Teile 14, 16 der oberen Abschlusswand des Wiegebehälters ist so bemessen, dass das Granulat, das in dem Zustand gemäß Fig. 3 noch mit dem Teil 16 in Berührung war, frei herabfallen kann, ohne dass seine Abwärtsbewegung durch den konischen Teil 16 gehemmt wird. Auf diese Weise ist sichergestellt, dass das gesamte Gewicht des Granulats, auch desjenigen Anteils, der sich innerhalb des Teils 16 befindet, jederzeit auf der Wiegezelle lastet und somit das Wiegeergebnis nicht verfälscht wird.

Wenn eine bestimmte Menge an Granulat aus dem Wiegebehälter 10 ausgetreten ist, wird das Absperrorgan 22 wieder geöffnet, so dass ein neuer Befüllzyklus beginnen kann.

In der Übergangsphase zwischen dem in Fig. 3 gezeigten Zustand und dem in Fig. 4 gezeigten Zustand sackt das Granulat 12 im Inneren des Wiegebehälters 10 allmählich nach unten, und dabei bewegen sich Granulatkörner an der Innenwand des Teils 14 und des Teils 16 der Abschlusswand entlang, so dass dort etwa anhaftender Staub weitgehend abgelöst wird.

Die Ansammlung größerer Mengen an Staub oder Engelshaar im oberen Teil des Wiegebehälters 10 lässt sich somit dadurch verhindern, dass zumindest in gewissen Intervallen Befüllzyklen durchgeführt werden, bei denen man das gesamte Innere des Wiegebehälters 10 bis zu Höhe des Absperrorgans 22 mit Granulat füllt, wie in Fig. 2 und 3 gezeigt ist. Dazwischen können auch Befüllzyklen durchgeführt werden, bei denen man das Innere des Wiegebehälters nur bis zu einer geringeren Höhe füllt.

Wenn die Granulatsorte gewechselt werden soll, so sollte jedenfalls der letzte Befüllzyklus vor dem vollständigen Entleeren des Wiegebehälters in der in Fig. 2 und 3 gezeigten Weise ausgeführt werden, damit möglichst wenig Staub und Engelshaar in dem Wiegebehälter 10 zurückbleiben und sich dann mit dem neuen Granulat mischen können. In den meisten Fällen kann so auf ein manuelles Reinigen des Wiegebehälters und des Teils 16 der Abschlusswand verzichtet werden. Allenfalls in den Fällen, in denen von einem sehr dunklen Granulat auf ein helles Granulat gewechselt wird, kann noch eine manuelle Reinigung sinnvoll sein, um eine wahrnehmbare Farbverfälschung des Kunststoffs zu vermeiden.

## Patentansprüche

1. Verfahren zum Befüllen eines Wiegebehälters (10) für Kunststoffgranulat (12), bei dem man das Granulat aus einem Zuführrohr (26) über ein Absperrorgan (22) in den Wiegebehälter (10) fallen lässt, **dadurch gekennzeichnet, dass** man den Wiegebehälter (10) nach oben durch eine Wand abschließt, die einen bis unmittelbar an das Absperrorgan (22) heranreichenden konischen Teil (16) hat, und dass man den Wiegebehälter bis zur Höhe des Absperrorgans (22) mit Granulat auffüllt.

2. Verfahren nach Anspruch 1, bei dem der Kegelwinkel (α) des konischen Teils (16) in Abhängigkeit von der Konsistenz des Granulats (12) gewählt wird.

3. Verfahren nach Anspruch 2, bei dem der Kegelwinkel (α) größer ist als der Schüttwinkel des Granulats.

4. Verwiegeeinrichtung zur Durchführung des Verfahrens nach einem der Ansprüche 1 bis 3, mit einem Wiegebehälter (10) und einem Zuführrohr (26), das über ein Absperrorgan (22) in den Wiegebehälter mündet, **dadurch gekennzeichnet, dass** der Wiegebehälter (10) nach oben durch eine Wand abgeschlossen ist, die einen bis unmittelbar an das Absperrorgan (22) heranreichenden konischen Teil hat.

5. Verwiegeeinrichtung nach Anspruch 4, bei der eine obere Wand (14, 16) des Wiegebehälters (10) insgesamt konisch ausgebildet ist.

6. Verwiegeeinrichtung nach Anspruch 4 oder 5, bei der der an das Absperrorgan (22) heranreichende konische Teil (16) getrennt vom Wiegebehälter (10) ausgebildet und unabhängig von dem Wiegebehälter (10) gehalten ist.

## Claims

1. A method of filling a weighing container (10) for plastics granulate (12), wherein the granulate is dropped from a supply tube (26) into the weighing container (10) via a shutter (22), **characterized in that** the weighing container (10) is closed-off on the top side by a wall having a conical part (16) that reaches directly up the shutter (22), and **in that** the weighing container is filled with granulate up to the level of the shutter (22).

2. The method according to claim 1, wherein the cone angle (α) of the conical part (16) is selected as dependent upon the consistency of the granulate (12).

3. The method according to claim 2, wherein the cone angle (α) is larger than the angle of repose of the granulate.

4. A weighing system for carrying out the method according to any of the claims 1 to 3, comprising a weighing container (10) and a supply tube (26) opening out into the weighing container via a shutter (22), **characterized in that** the weighing container is closed on the top side by a wall having a conical part that reaches directly up to the shutter (22).

5. The weighing system according to claim 4, wherein a top wall (14, 16) of the weighing container (10) has a conical configuration in its entirety.

6. The weighing system according to claim 4 or 5, wherein the conical part (16) reaching up to the shutter (16) is separate from the weighing container (10) and is held independently of the weighing container (10).

## Revendications

1. Procédé pour remplir un conteneur de pesage (10) pour un granulat de matière plastique (12), dans lequel le granulat provenant d'un tube d'alimentation (26) peut tomber dans le conteneur de pesage (10) par l'intermédiaire d'un organe d'obturation (22), **caractérisé en ce que** le conteneur de pesage (10) est fermé en haut par une paroi ayant une partie conique (16) qui s'étend directement jusqu'à l'organe d'obturation (22), et **en ce que** le conteneur de pesage (22) est rempli de granulat jusqu'à la hauteur de l'organe d'obturation (22) .

2. Procédé selon la revendication 1, dans lequel l'angle du cône (α) de la partie conique (16) est choisi en fonction de la consistance du granulat (12).

3. Procédé selon la revendication 2, dans lequel l'angle du cône (α) est supérieur à l'angle de déversement du granulat.

4. Dispositif de pesage pour mettre en oeuvre le procédé selon l'une des revendications 1 à 3, comportant un conteneur de pesage (10) et un tube d'alimentation (26) qui débouche dans le conteneur de pesage par l'intermédiaire d'un organe d'obturation (22), **caractérisé en ce que** le conteneur de pesage (10) est fermé en haut par une paroi ayant une partie conique qui s'étend directement jusqu'à l'organe d'obturation (22).

5. Dispositif de pesage selon la revendication 4, dans lequel une paroi supérieure (14, 16) du conteneur de pesage (10) est formée entièrement conique.

6. Dispositif de pesage selon la revendication 4 ou 5, dans lequel la partie conique (16) s'étendant jusqu'à l'organe d'obturation (22) est formée séparément du conteneur de pesage (10) et est maintenue indépendamment du conteneur de pesage (10).
